# EUROPEAN PATENT SPECIFICATION

(11) **EP 2 985 901 B1**
(45) Date of publication and mention of the grant of the patent: **16.01.2019**
(21) Application number: 15177647.3
(22) Date of filing: 21.07.2015
(51) Int. Cl.: H02M 5/458, H02J 4/00

(54) **HYBRID ELECTRIC PULSED-POWER PROPULSION SYSTEM FOR AIRCRAFT**
HYBRIDES ELEKTRISCHES IMPULSENERGIEANTRIEBSSYSTEM FÜR FLUGZEUG
SYSTÈME DE PROPULSION ÉLECTRIQUE HYBRIDE À PUISSANCE ÉMISE EN IMPULSION POUR AÉRONEF

(30) Priority: 23.07.2014 US 201414339132
(43) Date of publication of application: 17.02.2016
(73) Proprietor: Hamilton Sundstrand Corporation, Windsor Locks, CT 06096-1010 (US)
(72) Inventor: HIMMELMANN, Richard A., Beloit, WI 53511 (US); PERKINSON, Robert H., Stonington, CT 06378 (US); TONGUE, Stephen E., Hampden, MA 01036 (US)
(74) Representative: Dehns

(56) References cited:
- EP-A1- 2 801 719
- US-A1- 2009 156 068
- PHILIPPE J MASSON ET AL: "HTS Machines for Applications in All-Electric Aircraft", POWER ENGINEERING SOCIETY GENERAL MEETING, 2007. IEEE, IEEE, PI, 1 June 2007 (2007-06-01), pages 1-6, XP031118131, DOI: 10.1109/PES.2007.386223 ISBN: 978-1-4244-1296-9

## Description

### BACKGROUND

The present invention relates generally to hybrid electric propulsion systems, and more particularly to hybrid electric propulsion systems used for aircraft.

Conventional propulsion systems used on aircraft include turbo-jet, turbo-prop, and turbo-fan engines each having a core engine generally comprising, in axial flow series, an air intake, a low-pressure compressor (LPC), a high-pressure compressor (HPC), combustion equipment, a high-pressure turbine (HPT), a low-pressure turbine (LPT), and a core exhaust nozzle. The core engine works in a conventional manner such that air entering the air intake is accelerated and compressed by the LPC and directed into the HPC where further compression takes place. The compressed air exhausted from the HPC is directed into the combustion equipment where it is mixed with fuel and the mixture combusted. The resultant hot combustion products then expand through and thereby drive the high and low pressure turbines before being exhausted through the core exhaust nozzle. In the case of a turbo-jet engine, the LPT and HPT are connected to the LPC and HPC respectively through suitable shafting to drive each component during operation, leaving a substantial portion of the exhaust gas to be expelled through the core exhaust nozzle for propulsion. The LPT in a turbo-prop engine drives a propeller assembly through a reduction gear box for propulsion. Similarly, the LPT in a turbo-fan engine drives a large fan, generating core and bypass flows, for propulsion. The operation of each engine type combusts fuel to produce power for sustaining the operation of the engine and for generating propulsion, and has a range of operational conditions including ground idle, take-off, and cruise. Because the engine must function at each operational condition, having different fuel and power requirements, the engine cannot be optimized for all conditions, and therefore likely has lower fuel efficiency than an engine that operates over a narrower range.

One attempt to improve fuel efficiency of aircraft propulsion engines involved the creation of hybrid electric propulsion systems, which additionally includes an electric generator driven by the gas turbine engine and an energy storage system each for augmenting the gas turbine performance. The gas turbine can be designed to operate more efficiently over a narrower operating range while using the electric power from the generator and energy storage system to drive electric motors, extending the operational range of the gas turbine engine during take-off or other peak operational conditions. However, such systems still require the gas turbine engine to operate continuously at several operational conditions such as ground idle, take-off, and cruise.

The different power requirements between take-off and cruise are particularly significant for fixed-wing aircraft designed for vertical take-off. The gas-turbines for such aircraft have a large power requirement during take-off to overcome gravity but have a relatively small power requirement to sustain flight because of the lift produced by the wings. Reducing the fuel consumption of aircraft, particularly fixed-wing, vertical take-off aircraft, can increase the range and decrease the cost of operation, which continue to be goals of aircraft manufactures. Therefore a need exists for a hybrid-electric aircraft propulsion system with greater fuel efficiency. The patent application publication EP2801719A1 falls under Article 54(3) of the EPC and discloses a propulsion system comprising a gas turbine engine, a generator mechanically coupled to the gas turbine engine, a bi-directional converter, an energy store connected to the bi-directional converter.

### SUMMARY

The present invention is defined in claims 1 and 7. A propulsion system has a gas turbine engine optimized to operate at a single operating condition corresponding to a maximum continuous power output of the gas turbine engine, an electric motor system, an electric machine rotatably attached to the gas turbine engine and electrically connected to the electric motor system, and an energy storage system having bi-directional electrical connections with the electric motor system and the electric machine.

A method of operating a propulsion system includes providing a gas turbine engine optimized to operate at a single operating condition corresponding to a maximum continuous power output of the gas turbine engine, an electric motor system configured to drive a propulsion motor, an electric machine rotatably attached to the gas turbine engine and electrically connected to the electric motor system, and an energy storage system having bi-direction electrical connections with the electric motor system and the electric machine. The method also includes operating the gas turbine engine for a first period of time to provide electric power produced by the electric machine to the electric motor system and to recharge the energy storage system, turning the gas turbine engine off for a second period of time, and discharging the energy storage system to operate the electric motor system during the second period of time.

### BRIEF DESCRIPTION OF THE DRAWINGS

FIG. 1 is a schematic view of a pulsed-power, hybrid-electric propulsion system.
FIG. 2 is a chart illustrating typical horsepower requirements for a fixed-wing, vertical take-off aircraft during a flight as a percentage of maximum horsepower.
FIG. 3 is a chart illustrating the percent of total time spent at each condition during the flight of FIG. 2.
FIG. 4 is a chart of a typical duty cycle for a gas turbine incorporated into a pulsed-power, hybrid-electric propulsion system.

### DETAILED DESCRIPTION

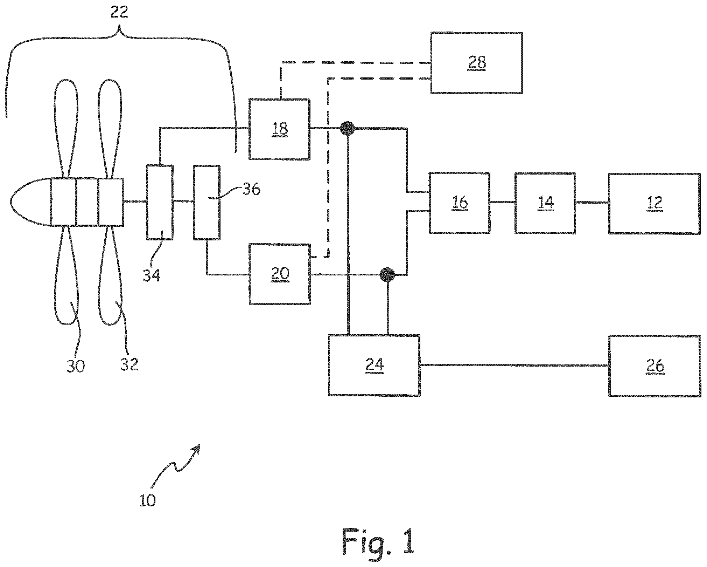

FIG. 1 is a schematic view of hybrid electric propulsion system 10 that utilizes pulsed-power propulsion. Hybrid electric propulsion system 10 includes gas turbine engine 12, electric machine 14, rectifier-inverter 16, motor drives 18 and 20, propulsion unit 22, converter-charger 24, and energy storage system 26. Generally, propulsion system 10 operates gas turbine engine 12 in an on-off or pulsed manner to provide electric power to motor drives 18 and 20 for driving propulsion unit 22. Propulsion unit 22 is used to provide propulsion to an aircraft. However, it will be appreciated by persons skilled in the art that propulsion system 10 can be utilized on other vehicles to achieve greater fuel efficiency than a conventional propulsion system.

Conventional propulsion systems have gas turbine engines designed to function during several operating conditions. Operating conditions include ground idle, takeoff, climb, cruise, loiter, egress, approach and landing. Typically in a turbo-prop engine, it is desirable to run the propeller at a fixed rpm for aerodynamic efficiency. Since the LPT or free turbine is mechanically linked to the propeller, it must turn at a fixed rpm along with the propeller. Depending on the propeller mode selected, the rotational speed may vary in the range of 100% to 80% of a maximum normal-operating rotational speed. "Maximum normal-operating speed" corresponds to the maximum, steady-state rotational speed at which the component is designed to operate. The HPT and HPC speeds vary depending on how much power is required. The typical rotational speed range for the HPC and HPT is between 100% and 50% of a maximum, normal-operating, rotational speed, which corresponds to a power output range. To function during multiple operating conditions, rotor geometries, stator geometries, and rotational speeds are designed to provide the most efficient compromise among the different operational conditions because optimizing for a single operating condition can cause conventional gas turbine engines to have bad performance or not function during other operating conditions.

By contrast, gas turbine engine 12 is required to operate and is optimized for operation at a single operating condition, typically referred to as maximum continuous power output. "Maximum continuous power output" refers to the maximum, steady-state, power output produced by gas turbine engine 12 during operation, and generally corresponds to take-off operating conditions. Because gas turbine engine 12 is only required to operate at maximum continuous output, optimizing does not require design compromises among several operating conditions and enables gas turbine engine 12 to have greater fuel efficiency than conventional gas turbines. Single operation condition designs have several advantages including optimized rotor blade and vane geometry, optimized flow path geometry including air inlets and exhaust nozzles, and optimized fuel combustion. Moreover, because gas turbine engine 12 is incorporated into propulsion system 10 that uses electric motors to drive propulsion unit 22, gas turbine engine 12 can be designed without bleed air, or air bled from the high and low pressure compressors to operate aircraft functions. Gas turbine engine 12 can be located co-axially with propulsion unit 22, such as in conventional propulsion systems, or can be remotely located in the aircraft for optimal weight distribution or another practical reason. Gas turbine engine 12 can also be designed without and does not require gearboxes or other mechanical connections necessary to utilize the power generated from gas turbine 12 for propulsion because most electrical machines benefit from the higher speeds associated with gas turbines. Instead, gas turbine engine 12 is used to generate electrical power that can be transited through cables, wires, or other electrical conductors. Although this invention is described with reference to gas turbine engine 12, other engine types, for example air-breathing piston engines and rotary engines (Wankles engines), can be adapted to pulsed-power operation by optimizing the engine for a single operating condition. If such engines are implemented in an aircraft, the inlet air can be compressed by a turbocharger or other similar device to enable the engine to operate at altitude.

Gas turbine engine 12 can also be used to generate electric power for systems other than propulsion system 10. For example, electric power could be used for on-board systems such as radar, directed energy weapons, cockpit power, environmental temperature and pressure control, and other electrical devices and systems.

Electric machine 14 is mechanically attached to gas turbine engine 12. For instance, electric machine 14 can be mounted co-axially with or mechanically linked at the low-pressure turbine (LPT) shaft. As described in greater detail below, electric machine 14 can function as a generator or as a motor in different operation phases. Electric machine 14 can be located downstream of the LPT or upstream of the LPC. Electric machine 14 includes an arrangement of windings forming a stator and an arrangement of magnets that form a rotor. The windings of electric machine 14 include conductors, such as copper wires, that are mutually insulated from each other and that are wound around a generally cylindrical metallic core. The magnets of electric machine 14 are preferably permanent magnets because permanent magnets do not require external excitation during operation. However, the magnets of electric machine 14 could be electromagnets powered by a direct current (DC) source, an induction machine, a switch reluctance machine, or a combination electric machine such as permanent magnets that rely on reluctance for added performance. The combination of windings and magnets is determined by the electric power requirements of propulsion system 10 and/or other on-board systems and gas-turbine operation, the electric power and operational requirements being determined with engineering methods known in the art.

When electric machine 14 functions as a generator, the magnets are attached to and rotate with an output shaft (not shown) of gas turbine engine 12, such as a shaft connected to the low pressure turbine (LPT). The magnetic field produced by the magnets rotates with gas turbine engine 12 and interacts with the windings of electric machine 14. Generally, the windings of electric machine 14 are stationary; however electric machine 14 will function so long as there is relative movement between the windings and magnets. The interaction between the magnetic field produced by the magnets and the windings induces a current in the windings that are electrically connected to rectifier-inverter 16. The electric power generated by electric machine 14 can be directed to drive propulsion unit 22 (or other on-board systems), to charge energy storage system 26, or to drive propulsion unit 22 while charging energy storage system 26.

Electric machine 14 can also function as a motor when three-phase, alternating current is supplied by inverter-converter 16 to the windings of electric machine 14. Each phase of the supplied current is out-of-phase with each other such that the interaction of the magnetic field with the magnets attached to gas turbine engine 12 causes a portion of it to rotate. When used as a motor, electric machine 14 can be designed to restart gas turbine engine 12 during flight.

Rectifier-inverter 16 rectifies alternating current generated by electric machine 14 when it functions as a generator and inverts direct current to alternating current when electric motor 14 functions as a motor. To facilitate its dual purpose, rectifier-inverter 16 is equipped with bi-directional electrical connections for its connection to motor drives 18 and 20 and electric machine 14. In some embodiments, rectifier-inverter 16 can be a passive rectifier in which converter-charger 24 is needed to control the direct current bus voltage. In other embodiments, rectifier-inverter 16 can be an active rectifier that controls the direct current bus voltage, thereby eliminating the need for converter-charger 24 to control the direct current bus voltage. The design of rectifier-inverter 16 is dependent on the power requirements of propulsion system 10 and/or other on-board systems and can be determined using conventional design methods.

Motor drives 18 and 20 manage the power input into propulsion unit 22. Motor drives 18 and 20 receive control signals from motor controller 28 to regulate electric power received from energy storage system 26 or generator 14. By increasing or decreasing the electric power entering propulsion unit 22, motor drives 18 and 20 can control the operation of propulsion unit 22 and, therefore, the thrust being provided by the propeller to the aircraft.

Propulsion unit 22 is a propulsion device adapted to be driven by one or more electric motors. In one embodiment, propulsion unit 22 includes two, counter-rotating propeller units 30 and 32 driven by electric motors 34 and 36 respectively. Because propeller unit 30 rotates in a direction opposite the direction or rotation of propeller unit 32, the reaction torque imposed on the aircraft is balanced, the net torque reaction on the aircraft due to the propeller units 30 and 32 is near or equal to zero. Propeller units 30 and 32 and the corresponding electric motors 34 and 36 can be designed to accommodate a vertical take-off in which the lift produced by propeller units 30 and 32 when orientated parallel to the ground is sufficient to raise the aircraft in the air in a helicopter-like manner. If the aircraft is equipped with fixed-wings, propeller units 30 and 32 can be used to propel the aircraft horizontally through the airstream. Although propulsion unit 22 was described in the context of two counter-rotating propeller units 30 and 32, it will be appreciated by persons skilled in the art that a single propeller system can be used with a single motor drive or that other motor drive and propulsion means could be implemented within propulsion system 10 such as a single propeller unit or a ducted fan.

In some embodiments, motor drives 18 and 20 can function as active rectifier-inverters such that propulsion motors 34 and 36 function as generators to create electric power from windmilling propeller units 30 and 32. "Windmilling" refers to the rotation of propeller units 30 and 32 caused by the flow of air through each unit when gas turbine engine 12 is not operating. In such an embodiment, propulsion unit 22 acts as a large ram air turbine, thus eliminating the need to have a ram air turbine (RAT) on the aircraft as a backup system.

Converter-charger 24 performs at least two functions within propulsion system 10. First, converter-charger 24 regulates direct current entering energy storage system 26 when it is charging. Second, converter-charger 24 regulates the voltage supplied to propulsion unit 22 when energy storage system 26 discharges. To facilitate this dual purpose, converter-charger 24 has bi-directional electrical connections to energy storage system 26, rectifier-inverter 16, and motor drives 18 and 20.

Energy storage system 26 includes one or more rechargeable components capable of storing electrical energy. In one embodiment, energy storage system 26 can include an arrangement of rechargeable batteries. The capacity of energy storage system 26 is dependent upon gas turbine engine 12 operation, the power requirements of propulsion unit 22, and the power requirements of other aircraft systems receiving power from propulsion system 10. When propulsion system 10 allows a longer discharge period, the capacity of energy storage system 26 can be larger. By contrast, the capacity of energy storage system 26 can be smaller when propulsion system allows a shorter discharge period.

There are at least five modes of operating propulsion system 10 during a typical flight; 1) charging mode, 2) maximum power (or take-off) mode, 3) in-flight charging mode, 4) in-flight discharging mode, and 5) emergency ram air turbine mode. However, even though the following modes are described in reference to an aircraft flight, it will be appreciated that these or other modes of operation can be applicable to the power requirements of other hybrid-electric power applications.

Charging mode occurs prior to take-off and involves operating gas-turbine engine 12 at a maximum efficient operating condition to cause electric machine 14 to produce alternating current. The alternating current is directed into rectifier-inverter 16 where it is rectified into direct current that is directed to converter-charger 24. Energy storage system 26 receives and stores the direct current that is regulated by converter-charger 24. When energy storage system 26 is at or near maximum capacity, converter-charger 24 stops directing direct current into energy storage system 26, and the charging mode is complete. The energy stored in energy storage system 26 or produced by electric machine 14 becomes available for propulsion unit 22 or other electrical systems powered by propulsion system 10.

Alternatively, charging mode can involve charging energy storage system 26 from a ground based source, for example a ground power unit or GPU can be used during charging. Charging from a ground-based source eliminates the need to operate gas-turbine engine 12 while the aircraft is on the ground. Whether energy storage system 26 receives power from gas-turbine engine 12 or a ground-based source, the aircraft can perform ground maneuvers by discharging energy storage system 26 to operate propulsion unit 22 or it can obtain electrical power from gas-turbine engine 12 or a combination thereof.

Maximum power mode occurs when the electric power produced by electric machine 14 and stored by energy storage system 26 is directed into propulsion unit 22 through motor drives 18 and 20. Electric motors 34 and 36 cause propeller units 30 and 32 to rotate generating lift or thrust, depending upon the aircraft orientation. During this mode of operation, energy storage system 26 discharges electrical power while electric machine 14 continuously produces electric power from the rotation caused by gas turbine engine 12 operating at its maximum efficient operation condition. When energy storage system 26 is depleted, electric machine 14 continues to direct power into propulsion unit 22, which continues to operate albeit at a lower power level. Maximum power mode generally occurs during take-off, climbing, descending (egress), and landing of the aircraft.

In-flight charging mode occurs after take-off when electric power produced by electric machine 14 is directed into both propulsion unit 22 to provide propulsion and energy storage system 26 to store surplus electric power. During in-flight charging mode, gas turbine engine 12 continuously operates at full power to provide the relative rotation between generator parts to produce electric power. When energy storage system 26 is at or near capacity, combustion in gas-turbine engine 12 stops, and the speed of gas-turbine engine 12 decreases until rotation stops. Alternatively, electric power supplied from energy storage system 26 to one or more starting motors attached to the LPT and HPT shafts can be used to maintain a restart idle condition of gas-turbine engine 12 without utilizing combustion. Restart idle condition involves maintaining LPT and HPT rotor speeds that are equal to or less than the LPT and HPT rotor speeds required to produce the airflow and pressure conditions necessary to sustain combustion. When gas-turbine engine 12 is maintained at a restart idle condition, the time required to restart gas-turbine engine 12 is reduced.

In-flight discharging mode can follow in-flight charging mode and occurs when energy storage system 26 discharges electrical power while gas turbine engine 12 is not operating. The electric power from energy storage system 26 is directed into propulsion unit 22 to provide aircraft propulsion. In-flight discharging mode continues until energy storage system 26 is depleted except for electric power reserved for restarting gas turbine engine 12.

Propulsion system 10 can alternate between in-flight charging and discharging modes to provide pulsed-power hybrid electric propulsion characterized by periods of operating gas turbine engine 12 at full power and periods when gas turbine engine 12 is not operating (or is winding down). The period of time gas turbine engine 12 operates versus the period of time it is not operating can be varied by adjusting the capacity of energy storage system 26. Increasing the capacity of energy storage system 26 allows for longer periods of in-flight charging and discharging while decreasing its capacity requires shorter periods of in-flight charging and discharging. The optimal capacity of energy storage system 26 will be dependent on each application; however an optimal capacity of energy storage system 26 can be determined through evaluating the electric power requirements of propulsion unit 22 and other electric systems powered by propulsion system 10.

Restarting gas turbine engine 12 to transition from in-flight discharging to charging modes can be accomplished by utilizing electric power stored in energy storage system 26. Energy storage system 26 discharges electric power to converter-charger 24, which regulates the electric power supplied to rectifier-inverter 16. Rectifier-inverter 16 inverts the supplied electric power to three-phase, alternating current power and directs it to the windings of one or more starter motors attached to the LPT and HPT shafts, producing a magnetic field. Each phase of the outputted alternating current is out of phase with the other phases such that interaction between the magnetic field in the windings and the magnets of the starter motor or motors cause the LPT and HPT shafts to rotate. When the LPT and HPT accelerate to a speed sufficient to sustain the air flow and pressure necessary for combustion, fuel is injected and combusted. The exhaust gases resulting from combustion accelerate the HPT and LPT of gas turbine engine 12 to full operating speed thereby completing the engine restart process.

Emergency ram air turbine mode occurs when gas turbine engine 12 is not operating and cannot be restarted to provide electric power to energy storage system 26. When this occurs, electric power in energy storage system 26 can be used to position the blades of propeller units 30 and 32 such that air passing therethrough causes propeller units 30 and 32 to rotate without electric power. In this condition, electric motors 34 and 36 rotate with propeller units 30 and 32, respectively, and can function as generators. The electric power generated from electric motors 34 and 36 can be directed into energy storage system 26. When energy storage system 26 is at or near capacity, propulsion system 10 can enter an in-flight discharging mode to power the aircraft during a landing without relying on gas turbine engine 12.

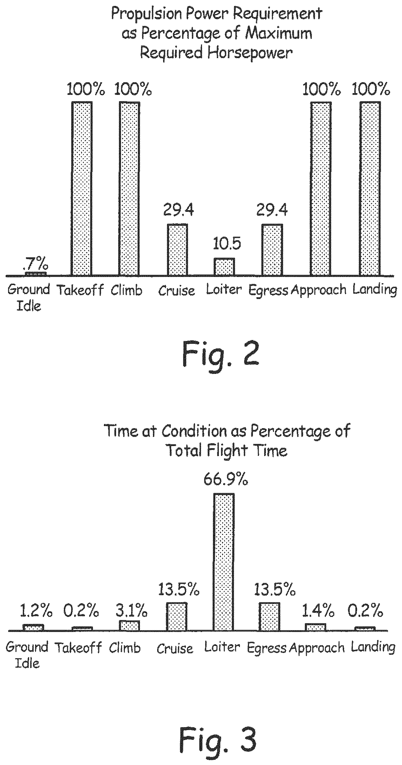

FIG. 2 is a chart illustrating typical horsepower requirements for a fixed-wing, vertical take-off aircraft during a flight as a percentage of maximum horsepower. The operating conditions in a typical flight include ground idle, take-off, climb, cruise, loiter, egress, approach, and landing. Ground idle is the time spent on the ground prior to take-off during which gas-turbine engine 12 is operating. Take-off refers to the period of time during which the aircraft accelerates into the air from the ground either using a vertical take-off or through using a runway. Climb is the period of time after take-off during which the aircraft increases its altitude to a cruising altitude. Cruise refers to the period of time when the aircraft is maintaining cruising altitude and travels to a destination. Loiter is the period of time the aircraft remains in the vicinity of a destination. Egress is the period of time during which the aircraft maintains cruising altitude and returns to its take-off origin. Approach is the period of time during which the aircraft descends from cruising altitude on approach to its take-off origin. Landing occurs when the aircraft returns to the ground and decelerates to a stop.

As shown in FIG. 2, maximum horsepower is required from propulsion system 10 during takeoff, climb, approach, and landing whereas a relatively small amount of horsepower (between approximately 10.5% and 29.4% of maximum horsepower) is required from propulsion system 10 while the aircraft is in flight. The minimum horsepower requirement, approximately .7%, is used while the aircraft is operating in ground idle.

FIG. 3 is a chart illustrating the percent of total time spent at each condition during the flight of FIG. 2. The operating conditions ground idle, take-off, climb, cruise, loiter, egress, approach, and landing refer to the same operating conditions described for FIG. 2. As shown in FIG. 3, the longest segment of a typical flight is loiter, corresponding to approximately 66.9% of the flight during which propulsion system 10 has its lowest in-flight horsepower requirement of approximately 10.5% of maximum horsepower.

Conventional propulsion systems are designed for the maximum horsepower condition and operate at a reduced speed during flight or the cruise, loiter, and egress operating conditions. Operating at reduced speeds can result in less efficient operating during the longest portions of the flight.

Hybrid electric propulsion systems can be more efficient than conventional propulsion systems because they can be designed to operate efficiently at less than the maximum horsepower condition by relying on the energy storage system to provide the additional power during a maximum horsepower condition. However, hybrid electric propulsion systems typically require the gas turbine engine to operate continuously and consequently tend to be less efficient during the longest portions of a flight.

Pulsed-power hybrid electric propulsion systems such as propulsion system 10 only operate gas turbine engine 12 at its most efficient design condition, maximum power output. When gas turbine engine 12 is not operating, energy storage system 26 provides electric power to propulsion unit 22. The resulting pulsed-power operation operates gas turbine engine 12 for a fraction of the in-flight time corresponding to the cruise, loiter, and egress operating conditions. Propulsion system 10, therefore, can be more fuel efficient than a conventional or hybrid electric propulsion system.

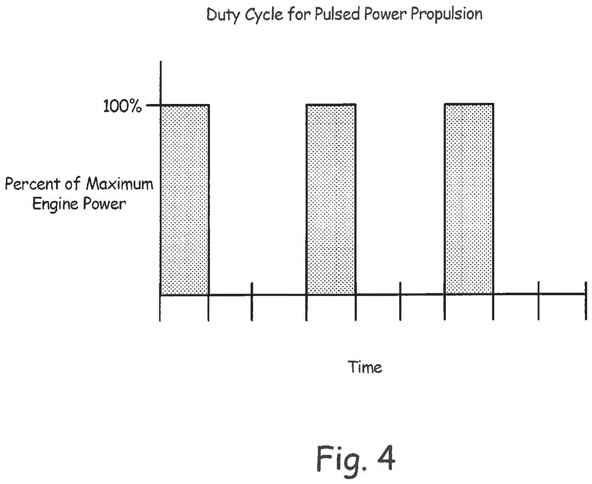

FIG. 4 is a chart of a typical duty cycle for a gas turbine incorporated into a pulsed-power, hybrid-electric propulsion system. The shaded bars represent periods of time during which gas turbine engine 12 is operating at full power. The periods of time in-between the shaded bars represent periods of time during which propulsion system 10 is powered by discharging energy storage system 26. As shown in FIG. 4, gas turbine engine 12 spends more time in the "off" position, resulting in a more fuel efficient system as described above. Alternatively, gas turbine engine 12 can spend more time in the "on" position or operate continuously. The duty cycle of gas turbine engine 12 and whether more time is spent in the "on" or "off" position is determined by the power requirements of propulsion unit 22, the performance of gas turbine engine 12, and the storage capacity of energy storage system 26.

### Discussion of Embodiments

The following are non-exclusive descriptions of possible embodiments of the present invention.

A propulsion system can have a gas turbine engine optimized to operate at a single operating condition that corresponds to a maximum continuous power output of the gas turbine engine, an electric motor system, an electric machine rotatably attached to the gas turbine engine and electrically connected to the electric motor system, and an energy storage system having bi-directional connections with the electric motor system and the electric machine.

A further embodiment of the foregoing propulsion system can optionally include, additionally and/or alternatively, any one or more of the following features, configurations, and/or additional components:
A further embodiment of the foregoing propulsion system can have an electric motor system that can include at least one motor drive and at least one electric motor. The motor drive can be electrically connected to the electric machine and the energy storage system. The electric motor can be electrically connected to the at least one motor drive.

A further embodiment of any of the foregoing propulsion systems can have the electric motor drive at least one propeller.

A farther embodiment of any of the foregoing propulsion systems can have an electric motor system configured to operate a first propulsion motor and a second propulsion motor. The first propulsion motor can rotate in a direction opposite from the second propulsion motor.

A further embodiment of any of the foregoing propulsion systems can include a rectifier-inverter that has bi-directional electrical connects between the electric machine and the electric motor system and between the electric machine and the energy storage system. The rectifier-inverter can rectify electric power delivered by the electric machine to the electric motor system and the energy storage system. The rectifier-inverter inverts power delivered by the electric motor systems and the energy storage system to the electric machine. The propulsion system can further include a converter that has a bi-directional electrical connection between the energy storage system and the electric motor system and between the energy storage system and the electric machine. The converter can regulate the voltage outputted by the energy storage system to the electric machine. The converter can regulate current delivered by the electric motor system and the electric machine to the energy storage system.

A further embodiment of any of the foregoing propulsion systems can have a gas turbine engine that is remotely located on the aircraft.

A method of operating a propulsion system can include providing a gas turbine optimized to operate at a single operating condition that corresponds to a maximum continuous power output of the gas turbine engine, an electric motor system configured to drive a propulsion motor, an electric machine rotatably attached to the gas turbine engine and electrically connected to the electric motor system, and an energy storage system having bi-direction electrical connections with the electric storage system and the electric machine. The method can further include operating the gas turbine for a first period of time to provide electric power produced by the electric machine to the electric motor system and to recharge the energy storage system, turning off the gas turbine engine for a second period of time, and discharging the energy storage system to operate the electric motor system during a second period of time.

A further embodiment of the foregoing method can optionally include, additionally and/or alternatively, any one or more of the following features, configurations, and/or additional components:
A further embodiment of the foregoing method can include providing a starting motor that is rotatably attached to the gas turbine engine. The method can further include storing the electric power produced by the electric machine in the energy storage system, supplying electric power from the energy storage system to the starting motor, and using the starting motor to restart the gas turbine engine.

A further embodiment of any of the foregoing methods can include rotating at least one component of the gas turbine engine. The rotation of the at least one component of the gas turbine engine can create air flow and pressure conditions to sustain combustion within a combustion section of the gas turbine engine. The method can further include injecting fuel into the combustion section of the gas turbine engine and igniting the injected fuel

A further embodiment of any of the foregoing methods can have the first period of time that is less than the second period of time.

A further embodiment of any of the foregoing methods can include providing a starting motor rotably attached to the gas turbine engine, storing the electric power produced by the electric machine in the energy storage system, supplying electric power from the energy storage system to the starting motor, and using the starting motor to maintain a restart idle condition within the gas turbine engine during the second period of time.

A method of operating a propulsion system can include providing a gas turbine optimized to operate at a single operating condition that corresponds to a maximum continuous power output of the gas turbine engine, an electric motor system configured to drive a propulsion motor, and an energy storage system having a bi-direction electrical connection with the electric storage system. The propulsion motor can be a prop on an aircraft. The method can further include configuring the prop to be drive by fluid flowing therethrough and generating electric power when the prop rotates the electric motor system, the electric motor system functioning as a generator to produce electrical power.

A further embodiment of the foregoing method can optionally include, additionally and/or alternatively, any one or more of the following features, configurations, and/or additional components:
A further embodiment of the foregoing method can include providing an electric machine rotatably attached to the gas turbine engine and electrically connected to the electric motor system and the energy storage system. The method can further include storing electrical power produced by the electric motor system in the energy storage system, supplying electrical power from the energy storage system to the electric machine, configuring the prop to be drive by the electric motor system, and discharging the electric power from the energy storage system to drive the electric motor system.

## Claims

1. A propulsion system comprising:
a gas turbine engine (12) configured to operate at a single operating condition that corresponds to a maximum continuous power output of the gas turbine engine;
an electric propulsion motor system (34, 36) that is electrically driven, wherein the electric propulsion motor system is mechanically decoupled from the gas turbine engine;
an electric machine (14) rotatably attached to the gas turbine engine and electrically connected to the electric propulsion motor system (34, 36); and
an energy storage system (26) having bi-directional electrical connections with the electric motor system and the electric machine;
wherein the propulsion system is further configured to operate the gas turbine engine (12) for a first period of time to provide electric power produced by the electric machine (14) to the electric propulsion motor system (34, 36) and to recharge the energy storage system (26); turn off the gas turbine engine (12) for a second period of time; and discharge the energy storage system (26) to operate the electric propulsion motor system during the second period of time

2. The propulsion system of claim 1, wherein the electric motor system comprises:
at least one motor drive (18, 20) electrically connected to the electric machine and the energy storage system; and
at least one electric motor (34, 36) electrically connected to the at least one motor drive.

3. The propulsion system of claim 2, wherein the electric motor drives at least one propeller (30, 32).

4. The propulsion system of claim 1, wherein the electric motor system is configured to operate a first propulsion motor and a second propulsion motor, and wherein the first propulsion motor rotates in a opposite direction from the second propulsion motor.

5. The propulsion system of claim 1, further comprising:
a rectifier-inverter (16) that has bi-directional electrical connections between the electric machine and the electric motor system and between the electric machine and the energy storage system, wherein the rectifier-inverter rectifies electric power delivered by the electric machine to the electric motor system and the energy storage system, and wherein the rectifier-inverter inverts power delivered by the electric motor system and the energy storage system to the electric machine; and
a converter (24) that has bi-directional electrical connections between the energy storage system and the electric motor system and between the energy storage system and the electric machine, wherein the converter regulates the voltage outputted by the energy storage system to the electric machine and the electric motor system, and wherein the converter regulates current delivered by the electric motor system and the electric machine to the energy storage system.

6. The propulsion system of claim 1, wherein the gas turbine engine is remotely located on an aircraft.

7. A method of operating a propulsion system, the method comprising:
providing a gas turbine engine (12) configured to operate at a single operating condition that corresponds to a maximum continuous power output of the gas turbine engine;
providing an electric propulsion motor system (34, 36) configured to drive a propulsion motor that is mechanically decoupled from the gas turbine engine;
providing an electric machine (14) rotatably attached to the gas turbine engine (12) and electrically connected to the electric propulsion motor system; (34, 36)
providing an energy storage system (26) having bi-directional electrical connections with the electric propulsion motor system (34, 36) and the electric machine (14);
operating the gas turbine engine (12) for a first period of time to provide electric power produced by the electric machine (14) to the electric propulsion motor system (34, 36) and to recharge the energy storage system (26);
turning off the gas turbine engine (12) for a second period of time; and
discharging the energy storage system (26) to operate the electric propulsion motor system (34, 36) during the second period of time.

8. The method of claim 7, further comprising:
providing a starting motor (34, 36) rotatably attached to the gas turbine engine;
storing the electric power produced by the electric machine in the energy storage system;
supplying electric power from the energy storage system to the starting motor;
using the starting motor to restart the gas turbine engine.

9. The method of claim 8, further comprising:
rotating at least one component of the gas turbine engine, wherein rotation of the at least one component of the gas turbine engine creates air flow and pressure conditions to sustain combustion within a combustion section of the gas turbine engine;
injecting fuel into the combustion section of the gas turbine engine; and
igniting the injected fuel.

10. The method of claim 7, wherein the first period of time is less than the second period of time.

11. The method of claim 7, further comprising:
providing a starting motor rotatably attached to the gas turbine engine;
storing the electric power produced by the electric machine in the energy storage system;
supplying electric power from the energy storage system to the starting motor; and
using the starting motor to maintain a restart idle condition within the gas turbine engine during the second period of time.

12. The method of claim 7, further comprising:
coupling the propulsion motor to a prop (30, 32) on an aircraft;
configuring the prop to be driven by fluid flowing therethrough; and
generating electrical power when the prop rotates the electric motor system, wherein the electric motor system functions as a generator to produce electrical power.

## Patentansprüche

1. Antriebssystem, das Folgendes umfasst:
ein Gasturbinentriebwerk (12), das dazu konfiguriert ist, bei einer einzigen Betriebsbedingung zu arbeiten, die einer maximalen kontinuierlichen Leistungsausgabe des Gasturbinentriebwerks entspricht;
ein Elektromotorantriebssystem (34, 36), das elektrisch angetrieben wird, wobei das Elektromotorantriebssystem mechanisch von dem Gasturbinentriebwerk entkoppelt ist;
eine elektrische Maschine (14), die drehbar an dem Gasturbinentriebwerk angebracht ist und elektrisch mit dem Elektromotorantriebssystem (34, 36) verbunden ist; und
ein Energiespeichersystem (26), das bidirektionale elektrische Verbindungen mit dem Elektromotorsystem und der elektrischen Maschine aufweist;
wobei das Antriebssystem ferner dazu konfiguriert ist, das Gasturbinentriebwerk (12) für einen ersten Zeitraum zu betreiben, um eine elektrische Leistung, die von der elektrischen Maschine (14) produziert wird, an das Elektromotorantriebssystem (34, 36) bereitzustellen und um das Energiespeichersystem (26) neu zu laden; das Gasturbinentriebwerk (12) für einen zweiten Zeitraum abzuschalten; und das Energiespeichersystem (26) zu entladen, um das Elektromotorantriebssystem während des zweiten Zeitraums zu betreiben.

2. Antriebssystem nach Anspruch 1, wobei das Elektromotorsystem Folgendes umfasst:
mindestens einen Motorantrieb (18, 20), der elektrisch mit der elektrischen Maschine und dem Energiespeichersystem verbunden ist; und
mindestens einen Elektromotor (34, 36), der elektrisch mit dem mindestens einen Motorantrieb verbunden ist.

3. Antriebssystem nach Anspruch 2, wobei der Elektromotor mindestens einen Propeller (30, 32) antreibt.

4. Antriebssystem nach Anspruch 1, wobei das Elektromotorsystem dazu konfiguriert ist, einen ersten Antriebsmotor und einen zweiten Antriebsmotor zu betreiben, und wobei der erste Antriebsmotor sich in eine Richtung dreht, die dem zweiten Antriebsmotor entgegengesetzt ist.

5. Antriebssystem nach Anspruch 1, ferner umfassend:
einen Gleichrichter-Wechselrichter (16), der bidirektionale elektrische Verbindungen zwischen der elektrischen Maschine und dem Elektromotorsystem und zwischen der elektrischen Maschine und dem Energiespeichersystem aufweist, wobei der Gleichrichter-Wechselrichter eine elektrische Leistung gleichrichtet, die von der elektrischen Maschine an das Elektromotorsystem und das Energiespeichersystem geliefert wird, und wobei der Gleichrichter-Wechselrichter eine Leistung invertiert, die von dem Elektromotorsystem und dem Energiespeichersystem an die elektrische Maschine geliefert wird; und
einen Wandler (24), der bidirektionale elektrische Verbindungen zwischen dem Energiespeichersystem und dem Elektromotorsystem und zwischen dem Energiespeichersystem und der elektrischen Maschine aufweist, wobei der Wandler die Spannung reguliert, die von dem Energiespeichersystem an die elektrische Maschine und das Elektromotorsystem ausgegeben wird, und wobei der Wandler einen Strom reguliert, der von dem Elektromotorsystem und der elektrischen Maschine an das Energiespeichersystem geliefert wird.

6. Antriebssystem nach Anspruch 1, wobei das Gasturbinentriebwerk an einem Flugzeug entfernt positioniert ist.

7. Verfahren zum Betreiben eines Antriebssystems, wobei das Verfahren Folgendes umfasst:
Bereitstellen eines Gasturbinentriebwerks (12), das dazu konfiguriert ist, bei einer einzigen Betriebsbedingung zu arbeiten, die einer maximalen kontinuierlichen Leistungsausgabe des Gasturbinentriebwerks entspricht;
Bereitstellen eines Elektromotorantriebssystems (34, 36), das dazu konfiguriert ist, einen Antriebsmotor anzutreiben, der mechanisch von dem Gasturbinentriebwerk entkoppelt ist;
Bereitstellen einer elektrischen Maschine (14), die drehbar an dem Gasturbinentriebwerk (12) angebracht und elektrisch mit dem Elektromotorantriebssystem (34, 36) verbunden ist;
Bereitstellen eines Energiespeichersystems (26), das bidirektionale elektrische Verbindungen mit dem Elektromotorantriebssystem (34, 36) und der elektrischen Maschine (14) aufweist;
Betreiben des Gasturbinentriebwerks (12) für einen ersten Zeitraum, um eine elektrische Leistung, die von der elektrischen Maschine (14) produziert wird, an das Elektromotorantriebssystem (34, 36) bereitzustellen und um das Energiespeichersystem (26) neu zu laden;
Abschalten des Gasturbinentriebwerks (12) für einen zweiten Zeitraum; und
Entladen des Energiespeichersystems (26), um das Elektromotorantriebssystem (34, 36) während des zweiten Zeitraums zu betreiben.

8. Verfahren nach Anspruch 7, ferner umfassend:
Bereitstellen eines Anlassmotors (34, 36), der drehbar an dem Gasturbinentriebwerk angebracht ist;
Speichern der elektrischen Leistung, die von der elektrischen Maschine produziert wird, in dem Energiespeichersystem;
Zuführen von elektrischer Leistung von dem Energiespeichersystem an den Anlassmotor;
Verwenden des Anlassmotors, um das Gasturbinentriebwerk neu zu starten.

9. Verfahren nach Anspruch 8, ferner umfassend:
Drehen von mindestens einer Komponente des Gasturbinentriebwerks, wobei die Drehung der mindestens einen Komponente des Gasturbinentriebwerks Luftströmungs- und Druckbedingungen erzeugt, um eine Verbrennung innerhalb eines Brennerbereichs des Gasturbinentriebwerks aufrechtzuerhalten;
Einspritzen von Kraftstoff in den Brennerbereich des Gasturbinentriebwerks; und
Entzünden des eingespritzten Kraftstoffs.

10. Verfahren nach Anspruch 7, wobei der erste Zeitraum geringer ist als der zweite Zeitraum.

11. Verfahren nach Anspruch 7, ferner umfassend:
Bereitstellen eines Anlassmotors, der drehbar an dem Gasturbinentriebwerk angebracht ist;
Speichern der elektrischen Leistung, die von der elektrischen Maschine produziert wird, in dem Energiespeichersystem;
Zuführen von elektrischer Leistung von dem Energiespeichersystem an den Anlassmotor; und
Verwenden des Anlassmotors, um während des zweiten Zeitraums eine Neustart-Leerlauf-Bedingung innerhalb des Gasturbinentriebwerks zu erhalten.

12. Verfahren nach Anspruch 7, ferner umfassend:
Koppeln des Antriebsmotors an einen Propeller (30, 32) an einem Flugzeug;
Konfigurieren des Propellers dazu, von einem Fluid angetrieben zu werden, das dort hindurch strömt; und
Generieren von elektrischer Leistung, wenn der Propeller das Elektromotorsystem dreht, wobei das Elektromotorsystem als ein Generator zum Produzieren von elektrischer Leistung funktioniert.

## Revendications

1. Système de propulsion comprenant :
un moteur à turbine à gaz (12) configuré pour fonctionner dans une condition de fonctionnement unique qui correspond à une sortie de puissance continue maximale du moteur à turbine à gaz ;
un système de moteur de propulsion électrique (34, 36) qui est entraîné électriquement, dans lequel le système de moteur de propulsion électrique est découplé mécaniquement du moteur à turbine à gaz ;
une machine électrique (14) fixée de manière rotative au moteur à turbine à gaz et raccordée électriquement au système de moteur de propulsion électrique (34, 36) ; et
un système de stockage d'énergie (26) ayant des raccordements électriques bidirectionnels avec le système de moteur électrique et la machine électrique ;
dans lequel le système de propulsion est en outre configuré pour faire fonctionner le moteur à turbine à gaz (12) pendant une première période de temps pour fournir une puissance électrique produite par la machine électrique (14) au système de moteur de propulsion électrique (34, 36) et pour recharger le système de stockage d'énergie (26) ; mettre à l'arrêt le moteur à turbine à gaz (12) pendant une seconde période de temps ; et décharger le système de stockage d'énergie (26) pour faire fonctionner le système de moteur de propulsion électrique pendant la seconde période de temps.

2. Système de propulsion selon la revendication 1, dans lequel le système de moteur électrique comprend :
au moins un entraînement de moteur (18, 20) raccordé électriquement à la machine électrique et au système de stockage d'énergie ; et
au moins un moteur électrique (34, 36) raccordé électriquement à l'au moins un entraînement de moteur.

3. Système de propulsion selon la revendication 2, dans lequel le moteur électrique entraîne au moins une hélice (30, 32) .

4. Système de propulsion selon la revendication 1, dans lequel le système de moteur électrique est configuré pour faire fonctionner un premier moteur de propulsion et un second moteur de propulsion, et dans lequel le premier moteur de propulsion tourne dans une direction opposée par rapport au second moteur de propulsion.

5. Système de propulsion selon la revendication 1, comprenant en outre :
un redresseur-onduleur (16) qui a des raccordements électriques bidirectionnels entre la machine électrique et le système de moteur électrique et entre la machine électrique et le système de stockage d'énergie, dans lequel le redresseur-onduleur redresse une puissance électrique délivrée par la machine électrique au système de moteur électrique et au système de stockage d'énergie, et dans lequel le redresseur-onduleur inverse la puissance délivrée par le système de moteur électrique et le système de stockage d'énergie à la machine électrique ; et
un convertisseur (24) qui a des raccordements électriques bidirectionnels entre le système de stockage d'énergie et le système de moteur électrique et entre le système de stockage d'énergie et la machine électrique, dans lequel le convertisseur régule la tension produite en sortie par le système de stockage d'énergie vers la machine électrique et le système de moteur électrique, et dans lequel le convertisseur régule un courant délivré par le système de moteur électrique et la machine électrique au système de stockage d'énergie.

6. Système de propulsion selon la revendication 1, dans lequel le moteur à turbine à gaz est situé à distance sur un aéronef.

7. Procédé de fonctionnement d'un système de propulsion, le procédé comprenant :
la fourniture d'un moteur à turbine à gaz (12) configuré pour fonctionner dans une condition de fonctionnement unique qui correspond à une sortie de puissance continue maximale du moteur à turbine à gaz ;
la fourniture d'un système de moteur de propulsion électrique (34, 36) configuré pour entraîner un moteur de propulsion qui est découplé mécaniquement du moteur à turbine à gaz ;
la fourniture d'une machine électrique (14) fixée de manière rotative au moteur à turbine à gaz (12) et raccordée électriquement au système de moteur de propulsion électrique (34, 36) ;
la fourniture d'un système de stockage d'énergie (26) ayant des raccordements électriques bidirectionnels avec le système de moteur de propulsion électrique (34, 36) et la machine électrique (14) ;
le fonctionnement du moteur à turbine à gaz (12) pendant une première période de temps pour fournir une puissance électrique produite par la machine électrique (14) au système de moteur de propulsion électrique (34, 36) et pour recharger le système de stockage d'énergie (26) ;
la mise à l'arrêt du moteur à turbine à gaz (12) pendant une seconde période de temps ; et
le déchargement du système de stockage d'énergie (26) pour faire fonctionner le système de moteur de propulsion électrique (34, 36) pendant la seconde période de temps.

8. Procédé selon la revendication 7, comprenant en outre :
la fourniture d'un moteur de démarrage (34, 36) fixé de manière rotative au moteur à turbine à gaz ;
le stockage de la puissance électrique produite par la machine électrique dans le système de stockage d'énergie ;
l'approvisionnement du moteur de démarrage en puissance électrique en provenance du système de stockage d'énergie ;
l'utilisation du moteur de démarrage pour redémarrer le moteur à turbine à gaz.

9. Procédé selon la revendication 8, comprenant en outre :
la rotation d'au moins un composant du moteur à turbine à gaz, dans lequel la rotation de l'au moins un composant du moteur à turbine à gaz crée des conditions de flux et de pression d'air pour entretenir la combustion au sein d'une section de combustion du moteur à turbine à gaz ;
l'injection de carburant dans la section de combustion du moteur à turbine à gaz ; et
la mise à feu du carburant injecté.

10. Procédé selon la revendication 7, dans lequel la première période de temps est inférieure à la seconde période de temps.

11. Procédé selon la revendication 7, comprenant en outre :
la fourniture d'un moteur de démarrage fixé de manière rotative au moteur à turbine à gaz ;
le stockage de la puissance électrique produite par la machine électrique dans le système de stockage d'énergie ;
l'approvisionnement du moteur de démarrage en puissance électrique en provenance du système de stockage d'énergie ; et
l'utilisation du moteur de démarrage pour maintenir une condition de repos de redémarrage au sein du moteur à turbine à gaz pendant la seconde période de temps.

12. Procédé selon la revendication 7, comprenant en outre :
le couplage du moteur de propulsion à une hélice (30, 32) sur un aéronef ;
la configuration de l'hélice pour qu'elle soit entraînée par un fluide s'écoulant à travers celle-ci ; et
la génération d'une puissance électrique lorsque l'hélice fait tourner le système de moteur électrique, dans lequel le système de moteur électrique fonctionne en tant que générateur pour produire une puissance électrique.
